# EUROPÄISCHE PATENTSCHRIFT

(11) **EP 1 517 530 B1**
(45) Veröffentlichungstag und Bekanntmachung des Hinweises auf die Patenterteilung: **12.09.2012**
(21) Anmeldenummer: 04016872.6
(22) Anmeldetag: 16.07.2004
(51) Int. Cl.: H04M 11/02

(54) **Programmierbare Sprech- und/oder Videoeinrichtung**
Programmable voice and/or video device
Dispositif voix et/ou vidéo programmable

(30) Priorität: 22.08.2003 DE 10339093
(43) Veröffentlichungstag der Anmeldung: 23.03.2005
(73) Patentinhaber: Schneider Electric GmbH, 35708 Haiger (DE)
(72) Erfinder: Neumann, Udo, 58579 Schalksmühle (DE)
(74) Vertreter: Fleck, Hermann-Josef

(56) Entgegenhaltungen:
- WO-A-94/06238
- US-A- 5 475 741
- US-A- 5 587 735
- US-A- 5 854 831
- "Ethernut Project", , 10 June 2003 (2003-06-10), Retrieved from the Internet: URL:http://web.archive.org/web/20030610130 923/http://ethernut.de/de/index.html [retrieved on 2012-01-02]

## Beschreibung

Die Erfindung betrifft eine programmierbare Sprech- und/oder Videoeinrichtung, insbesondere einer Wechselsprech- und/oder Videoanlage an Gebäuden, mit einem Gehäuse, welches eine mit Leiterbahnen versehene elektronische Schaltung abdeckt, wobei die elektronische Schaltung zumindest ein mit zumindest einem Teil der Leiterbahnen verbundenes speicherprogrammierbares Bauelement aufweist.

Aus dem Stand der Technik ist bekannt, dass in Gebäuden zur Kommunikation von der Eingangstür in das Gebäude Türsprech- und Videoanlagen eingesetzt werden. Bei diesen Systemen werden verstärkt mikrocontroller-gesteuerte Geräte eingesetzt. Die verwendeten Mikrocontroller sind meist als integrierte Halbleiterelemente aufgebaut, wobei in zunehmendem Maße immer neuere Technologien zum Einsatz kommen.

Vermehrt werden Mikrocontroller eingesetzt, die eine kleine Speichergröße von beispielsweise 2 KB (Kilo-Byte), 4 KB oder 8 KB aufweisen. Dabei werden die unterschiedlichsten Speicherarten eingesetzt. Während in den letzten Jahren die OTP-Technologie (One Time Programmable -Technologie) für das nur einmalige Einspeichern eines Programms in den Mikrocontroller benutzt wird, werden in Zukunft verstärkt Flash-Speichertechnologien angewendet werden. Derartige Flash-Mikrocontroller können bis zu mehreren 100.000 Mal mit neuen Programmen programmiert werden.

In der Produktion von Türsprechanlagen werden die Flash-Mikrocontroller mit den entsprechenden Programmen programmiert und dann an den Kunden ausgeliefert. Eine Umprogrammierung der Flash-Mikrocontroller durch den Kunden ist zurzeit nicht möglich, da der Kunde selber größere Manipulationen an dem Gerät vornehmen müsste. Für eine neue Programmierung der Flash-Mikrocontroller muss das Gerät in der Regel geöffnet werden und ein angepasster Programmieradapter an den Mikrocontroller angebracht werden.

Aus dem Stand der Technik ist als eine weitere Lösung das Aufbringen von Steckleisten oder Buchsen an der Leiterplatte bekannt. Über die Steckerleisten oder Buchsen können mittels eines Steckers die Flash-Mikrocontroller umprogrammiert werden. Nachteil dieser Programmiermöglichkeiten ist eine unkomfortable Handhabung der Geräte oder das Erzeugen zusätzlicher Kosten durch Bauelemente wie Stecker oder Buchsen.

In der WO 94/06238 ist ein Telefon offenbart, auf dessen Rückseite RS-232 Datenübertragungsanschlüsse angeordnet sind. Im Inneren des Telefons sind Mikrocontroller und Speicher angeordnet, die mit dem Datenübertragungsanschluss in Verbindung stehen. Über einen Datenübertragungsanschluss können über ein angeschlossenes Gerät, z. B. einen Arbeitsplatzcomputer, Daten gesendet werden.

Die US 5,587,735 A zeigt ein Video-Telefon, das an eine ISDN-Anlage anschließbar ist. Auf der Rückseite sind mehrere Steckverbinder angeordnet, u. a. ein serieller RS-232C Anschluss.

Es ist Aufgabe der Erfindung, eine programmierbare Sprech- und/oder Videoeinrichtung anzugeben, bei welcher Programmänderungen ohne Öffnen des Gehäuses leicht durchführbar sind. Darüber hinaus soll die erfindungsgemäße programmierbare Sprech- und/oder Videoeinrichtung kostengünstig, d. h. ohne erheblichen Mehraufwand an Bauelementen gegenüber dem Stand der Technik herstellbar sein.

Die Aufgabe der Erfindung wird durch die Merkmale des Anspruches 1 gelöst. Vorteilhafte Weiterbildungen sind in den Unteransprüchen beschrieben.

Demgemäß weist das Gehäuse mindestens eine Öffnung auf, durch welche hindurch bei geschlossenem Gehäuse zumindest ein Teil der Leiterbahnen zur Programmierung des speicherprogrammierbaren Bauelements elektrisch kontaktierbar ist. Ein Öffnen der Gehäuseabdeckung ist bei der Programmierung nicht notwendig, so dass keine ungewollten Beschädigungen an der Elektronik von dem programmierenden Benutzer verursacht werden. Zudem wird die Handhabung deutlich verbessert.

Um insbesondere bei der Programmierung die Elektronik mit Spannung zu versorgen, kann durch die mindestens eine Öffnung hindurch zumindest ein weiterer Teil der Leiterbahnen zur Spannungsversorgung der Sprech- und/oder Videoeinrichtung mit einer Spannungsquelle elektrisch verbunden oder zu diesem Zweck kontaktiert werden.

Zusätzlich oder alternativ kann eine weitere Öffnung vorgesehen sein, durch welche hindurch zumindest ein weiterer Teil der Leiterbahnen zur Spannungsversorgung der Sprech- und/oder Videoeinrichtung mit einer Spannungsquelle elektrisch verbindbar bzw. kontaktierbar ist.

Um eine besonders einfache Art der Kontaktierung zu schaffen, weisen die elektrisch zu kontaktierenden Leiterbahnen Kontaktflächen an der die elektronische Schaltung tragenden Leiterplatte auf. Dabei können in vorteilhafter Weise die Kontaktflächen unterhalb der jeweiligen Gehäuseöffnung angeordnet sein und mit der jeweiligen Gehäuseöffnung im wesentlichen fluchten. Ein einfaches Kontaktieren ist somit gewährleistet.

Um eine Programmierung mit einfachen Maßnahmen durchführen zu können, lassen sich die Leiterbahnen bzw. die Kontaktflächen durch die jeweilige Gehäuseöffnung hindurch mittels Kontaktelementen kontaktieren, die mit einer Programmiereinrichtung verbunden sind. Auch können Kontaktelemente vorgesehen sein, um die Leiterbahnen bzw. die Kontaktflächen durch die jeweilige Gehäuseöffnung hindurch mit einer Spannungsquelle zu verbinden bzw. zu diesem Zweck zu kontaktieren.

Gemäß einer bevorzugten Ausführungsform lassen sich die Leiterbahnen bzw. die Kontaktflächen durch die jeweilige Gehäuseöffnung hindurch mittels Kontaktelementen kontaktieren, die mit einer Programmier- und Spannungsversorgungseinheit verbunden sind. Durch Vorsehen einer einzigen Einheit für die Versorgung mit Betriebsspannung und gleichzeitig zur Programmierung des speicherprogrammierbaren Bauelements wird die Handhabung noch weiter erleichtert.

Dabei kann die Programmiereinrichtung bzw. die Programmier- und Spannungsversorgungseinheit eine Adaptereinheit zum Anschluss einer Rechnereinheit umfassen. Mittels dieser externen Rechnereinheit lässt sich das speicherprogrammierbare Bauelement besonders komfortabel neu programmieren.

Die hierfür verwendete Rechnereinheit weist dazu eine Speichereinrichtung auf, in welcher das in das speicherprogrammierbare Bauelement einzuprogrammierende Programm abgelegt ist. Die Rechnereinheit kann ein Desktop-Computer, tragbarer Notebook-Computer oder dergleichen Personalcomputer sein.

Um eine sichere Kontaktierung zu gewährleisten, weisen gemäß einer vorteilhaften Ausgestaltung die Kontaktelemente elektrisch leitfähige Nadel- und/oder Federkontakte oder dergleichen eine elektronisch leitfähige Verbindung zu den Kontaktflächen herstellende Kontakte auf.

In vorteilhafter Weise lassen sich derartige Kontakte bei der Einführung in die jeweiligen Gehäuseöffnungen in diesen festlegen. Dadurch wird ein während des Programmiervorgangs erwünschtes sicheres Kontaktieren gewährleistet, so dass der Datenstrom und/oder die Spannungsversorgung nicht unterbrochen werden. Zu diesem Zweck können die Kontaktelemente in den jeweiligen Gehäuseöffnungen im wesentlichen passgenau durch Reibungskräfte festgelegt sein, wobei Fixiermittel zur Festlegung der Kontaktelemente in den jeweiligen Gehäuseöffnungen an den Kontaktelemente und/oder den Gehäuseöffnungen vorgesehen sein können.

Durch die Programmierung des speicherprogrammierbaren Bauelements lässt sich die Funktionalität der Sprech- und/oder Videoeinrichtung entsprechend dem einprogrammierten Programm auf einfache Weise verändern.

Um die optische Erscheinung der Sprech- und/oder Videoeinrichtung nicht zu verändern, können die mindestes eine Öffnung und/oder die mindestens eine weitere Öffnung an der dem Benutzer abgewandten Rückseite des Gehäuses angeordnet sein. Da eine Neuprogrammierung relativ selten vorzunehmen ist, kann auch ein evtl. notwendiges Abmontieren der Sprech- und/oder Videoeinrichtung von einer Gebäudewand in Kauf genommen werden.

Das beschriebene Programmier-Verfahren kann für verschieden Geräte einer Sprech- und/der Videoanlage durchgeführt werden, die Kontaktierungsöffnungen im Gehäuse besitzen. Dies können auch so genannte Video-Hausstationen oder Wechselsprechstellen ohne Handapparat sein.

Nachfolgend wird die Erfindung anhand einer bevorzugten Ausführungsform unter Bezugnahme auf die beigefügten Zeichnungen näher erläutert.

Es zeigen:
- Figur 1: in schematischer und perspektivischer Draufsicht eine Sprechstelle für eine Wechselsprechanlage, die im ungeöffneten Zustand programmierbar ist;
- Figur 2: in schematischer Ansicht die Rückseite der in Figur 1 dargestellten Sprechstelle für einer Wechselsprechanlage;
- Figur 3: in schematischer Draufsicht eine mit einer elektronischen Schaltung versehene Leiterptatte zum Einsatz in einer in Figur 1 und Figur 2 dargestellten Sprechstelle für eine Wechselsprechanlage;
- Figur 4: in schematischer Seitenansicht die in Figur 3 dargestellte Leiterplatte; und
- Figur 5: in schematischer Seitenansicht und im Teilschnitt die in Figur 1 und 2 dargestellte Sprechstelle für eine Wechselsprechanlage mit anzuschließenden Komponenten für eine Programmierung.

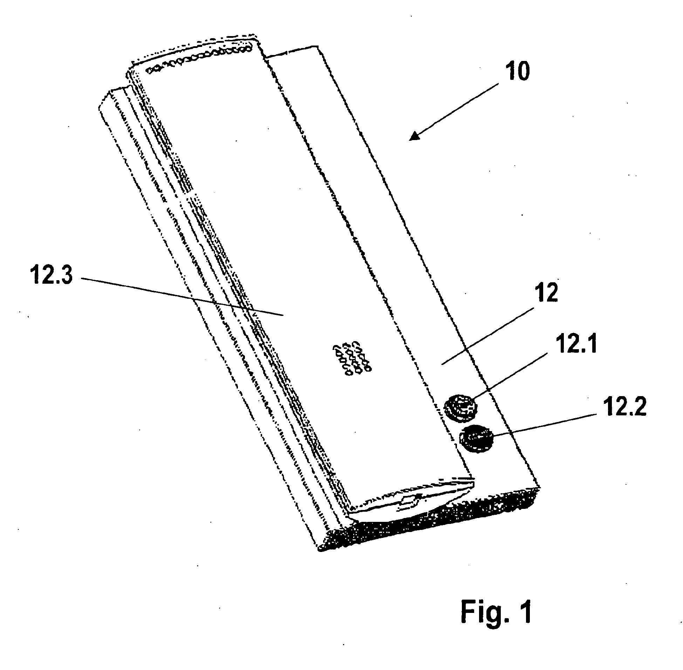

Figur 1 zeigt in schematischer und perspektivischer Draufsicht eine Sprechstelle 10 für eine Wechselsprechanlage, die im ungeöffneten Zustand programmier bar ist. Eine derartige Sprechstelle 10 wird auch als Wohntelefon bezeichnet. Die Sprechstelle 10 weist ein Gehäuse 12 mit Bedienknöpfen 12.1 und 12.2 auf. Weiterhin ist ein Handapparat 12.3 für den Benutzer vorgesehen.

Eine derartige Sprechstelle kann zusätzlich auch einen (nicht gezeigten) Videomonitor aufweisen, welcher nicht nur eine akustische sondern auch eine optische Verbindung zur Gegenstelle erlaubt.

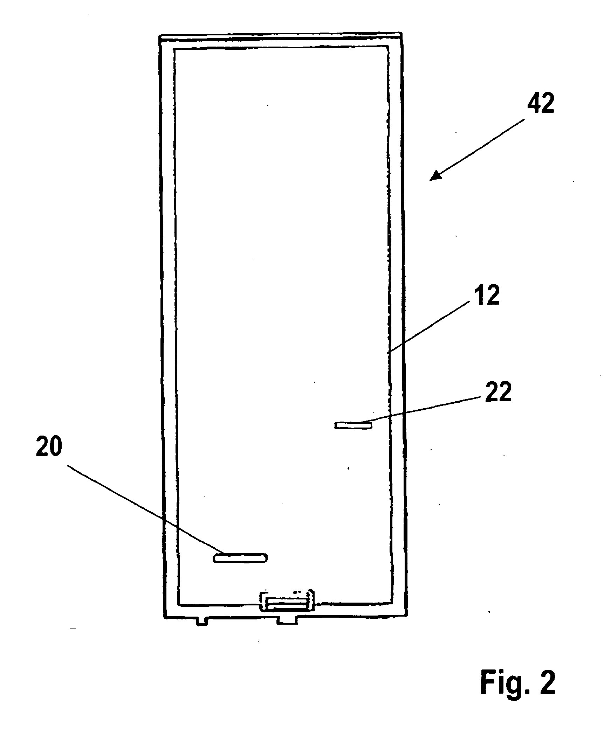

Figur 2 zeigt in schematischer Ansicht die dem Benutzer abgewandte Rückseite 42 der in Figur 1 dargestellten Sprechstelle 10 für einer Wechselsprechanlage. An der Rückseite 42 ist am Unterteil des Gehäuses 12 eine erste Öffnung 20 zum Anschließen einer (nicht gezeigten) Programmiereinrichtung und eine zweite Öffnung 22 zum Anschließen einer (nicht gezeigten) Spannungsquelle angeordnet. Beide Öffnungen 20 und 22 können zu diesem Zweck mit einem (nicht gezeigten) Anschlussadapter verbunden werden.

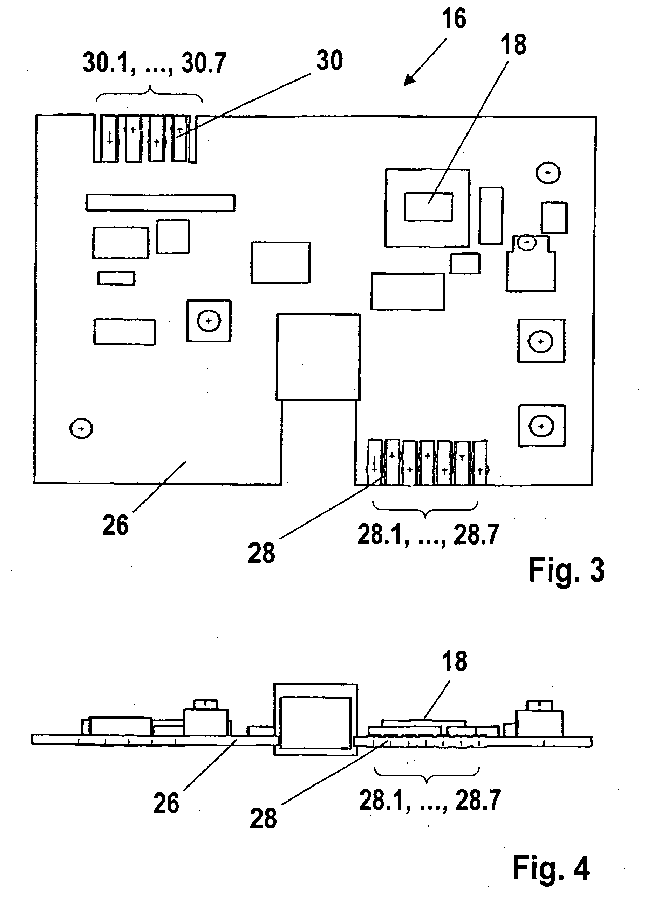

Figur 3 zeigt in schematischer Draufsicht eine mit einer elektronischen Schaltung 16 versehene Leiterplatte 26 zum Einsatz in einer in Figur 1 und Figur 2 dargestellten Sprechstelle 10 für eine Wechselsprechanlage. Figur 4 zeigt eine entsprechende Seitenansicht der in Figur 3 dargestellten Leiterplatte 26. Die elektronische Schaltung 16 weist eine Anzahl von nicht näher spezifizierten elektronischen Bauteilen auf, die durch (nicht gezeigte) Leiterbahnen miteinander verschaltet sind. Die elektronische Schaltung 16 weist ein mit einem Teil der Leiterbahnen verbundenes speicherprogrammierbares Bauelement 18 auf. Diese Bauelement 18 ist als ein Flash-Mikrocontroller für mehrfache Programmierung ausgebildet.

Durch die in Figur 2 dargestellten, an der Rückseite 42 des Gehäuses vorgesehen Öffnungen 20 und 22 hindurch lässt sich zumindest ein Teil der Leiterbahnen zur Programmierung des speicherprogrammierbaren Bauelements 18 elektrisch kontaktieren. Zu diesem Zweck sind an der Leiterplatte 26 Kontaktflächen 28 und 30 an den elektrisch zu kontaktierenden Leiterbahnen ausgebildet. Die Kontaktflächen 28 und 30 sind jeweils entsprechend der zu kontaktierenden Leiterbahnen in gegeneinander elektrisch isolierte Teilbereiche 28.1, 28.2, ..., 28.7 und 30.1, 30.2, ..., 30.7 untergliedert. Jeder Teilbereich 28.1, 28.2, ..., 28.7 und 30.1, 30.2, ..., 30.7 ist dabei mit einer separaten Leiterbahn verbunden.

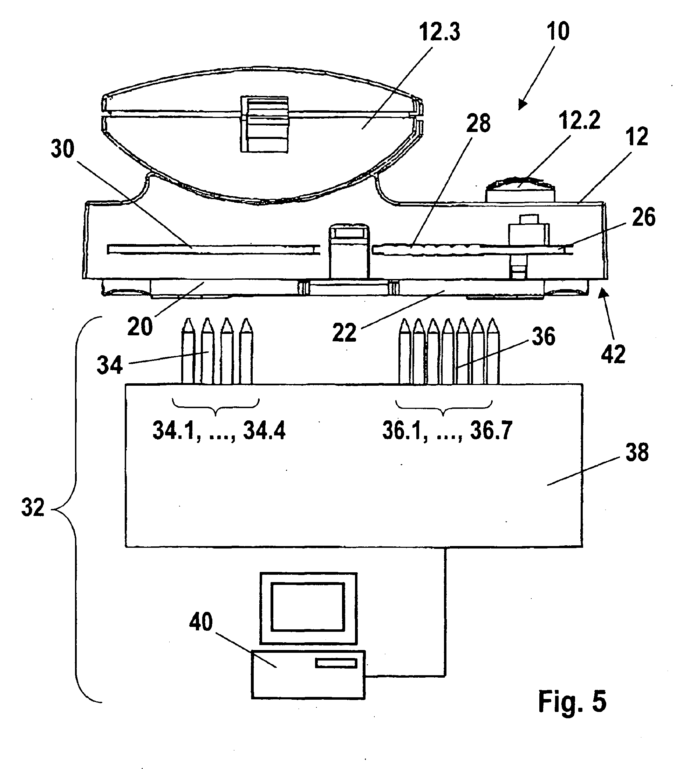

Figur 5 zeigt in schematischer Seitenansicht und im Teilschnitt die in Figur 1 und 2 dargestellte Sprechstelle 10 für eine Wechselsprechanlage mit anzuschließenden Komponenten für eine Programmierung. Bei der Programmierung muss das Gehäuse 12 nicht geöffnet werden. Die Sprechstelle 10 wird geschlossen mit einer Programmier- und Spannungsversorgungseinheit 32 verbunden. Die Programmier- und Spannungsversorgungseinheit 32 weist einen Programmieradapter 38 auf, welcher als Kontaktelemente Nadel- oder Federkontakte 34 und 36 aufweist, die den Kontakt zu den beiden Kontaktflächen 28 und 30 in der Sprechstelle 10 herstellen. Die Kontaktelemente 28 und 30 können jedoch auch als andere eine elektronisch leitfähige Verbindung zu den Kontaktflächen 28 und 30 herstellende Kontakte ausgebildet sein.

Die Kontaktelemente 34 und 36 sind jeweils entsprechend der zu kontaktierenden Teilbereiche 28.1, 28.2, ..., 28.7 und 30.1, 30.2, ..., 30.7 der Kontaktflächen 28 und 30 in gegeneinander elektrisch isolierte Teilbereiche 34.1, 34.2, ..., 34.4 und 36.1, 36.2, ..., 36.7 untergliedert. Jeder Teilbereich 34.1, 34.2, ..., 34.4 und 36.1, 36.2, ..., 36.7 ist dabei mit einer separaten Leitung verbunden. Über die Kontaktfläche 28 wird die elektronische Schaltung 16 mit Spannung versorgt. Über die Kontaktfläche 30 werden die Programmierdaten eingeladen.

Die Kontaktflächen 28 und 30 sind unterhalb der jeweiligen Gehäuseöffnung 20 bzw. 22 angeordnet und fluchten mit der jeweiligen Gehäuseöffnung 20 bzw. 22.

Der Programmieradapter 38 wird an einen tragbaren Laptop 40 angeschlossen. Im Laptop 40 ist das neue Programm oder neue Programmteile für die Sprechstelle 10 gespeichert. Mit Hilfe des Laptops 40 kann das neue Programm über den Programmieradapter 38 in die Sprechstelle 10 geladen werden. Damit erhält die Sprechstelle 10 neue Funktionen.

Die Kontaktelemente 34 und 36 lassen sich bei der Einführung in die jeweiligen Gehäuseöffnungen 20 bzw. 22 in diesen fixieren. Dazu sind die Kontaktelemente 34 und 36 in den jeweiligen Gehäuseöffnungen 20 bzw. 22 im wesentlichen passgenau durch Reibungskräfte festgelegt. Als zusätzliche Fixiermittel zur Festlegung der Kontaktelemente 34 und 36 in den jeweiligen Gehäuseöffnungen 20 bzw. 22 können an den Kontaktelementen 34 und 36 die Gehäuseöffnungen 20 und 22 hintergreifende Klemmnasen oder dergleichen Klickverbindungselemente angeordnet sein.

## Patentansprüche

1. Programmierbare Sprech- und/oder Videoeinrichtung (10) mit einem Gehäuse (12), welches eine mit Leiterbahnen versehene elektronische Schaltung (16) abdeckt, wobei die elektronische Schaltung (16) zumindest ein mit zumindest einem Teil der Leiterbahnen verbundenes speicherprogrammierbares Bauelement (18) aufweist und wobei das Gehäuse (12) mindestens eine Öffnung (20; 22) aufweist, durch welche hindurch bei geschlossenem Gehäuse (12) zumindest ein Teil der Leiterbahnen zur Programmierung des speicherprogrammierbaren Bauelements (18) elektrisch kontaktierbar ist,
**dadurch gekennzeichnet,**
**dass** die etektronische Schaltung (16) auf einer Leiterplatte (26) aufgebaut ist, wobei an den elektrisch zu kontaktierenden Leiterbahnen Kontaktflächen (28, 30) an der Leiterplatte (26) ausgebildet sind,
**dass** die Kontaktflächen (28, 30) unterhalb der jeweiligen Gehäuseöffnung (20; 22) angeordnet sind und mit der jeweiligen Gehäuseöffnung (20; 22) fluchten, wobei die Kontaktflächen (28; 30) durch die jeweilige Gehäuseöffnung (20; 22) hindurch mittels mit einer Programmiereinrichtung verbindbaren Kontaktelementen (34, 36) kontaktierbar sind, die den kontakt zu den kontaktflächen (28; 30) herstellende elektrish leitfähige Nodel-und/oder Federkontakte aufweisen, wobei die Kontaktelemente (34; 36) bei der Einführung in die jeweiligen Gehäuseöffnungen (20, 22) in diesen fixierbar sind und wobei die Kontaktelemente (34; 36) in den jeweiligen Gehäuseöffnungen (20, 22) passgenau durch Reibungskräfte und an den kontaktelementen (34; 36) angeordnete Klemmnasen festgelegt sind hintergreifen, die die Gehäuseöffmingen (20, 22)

2. Sprech- und/oder Videoeinrichtung nach Anspruch 1,
**dadurch gekennzeichnet,**
**dass** durch die mindestens eine Öffnung (22) hindurch zumindest ein weiterer Teil der Leiterbahnen zur Spannungsversorgung der Sprech- und/oder Videoeinrichtung (10) mit einer Spannungsquelle elektrisch verbindbar bzw. kontaktierbar ist.

3. Sprech- und/oder Videoeinrichtung nach Anspruch 1 oder 2,
**dadurch gekennzeichnet,**
**dass** das Gehäuse (12) mindestens eine weitere Öffnung (22) aufweist, durch welche hindurch zumindest ein weiterer Teil der Leiterbahnen zur Spannungsversorgung der Sprech- und/oder Videoeinrichtung (10) mit einer Spannungsquelle elektrisch verbindbar bzw. kontaktierbar ist.

4. Sprech- und/oder Videoeinrichtung nach einem der Ansprüche 1 bis 3,
**dadurch gekennzeichnet,**
**dass** die Leiterbahnen bzw. die Kontaktflächen (28; 30) durch die jeweilige Gehäuseöffnung (20; 22) hindurch mittels mit einer Spannungsquelle verbindbaren Kontaktelementen kontaktierbar sind.

5. Sprech- und/oder Videoeinrichtung nach einem der Ansprüche 1 bis 4,
**dadurch gekennzeichnet,**
**dass** die Leiterbahnen bzw. die Kontaktflächen (28; 30) durch die jeweilige Gehäuseöffnung (20; 22) hindurch mittels mit einer Programmier- und Spannungsversorgungseinheit (32) verbindbaren Kontaktelementen (34, 36) kontaktierbar sind.

6. Sprech- und/oder Videoeinrichtung nach einem der Ansprüche 1 bis 5,
**dadurch gekennzeichnet,**
**dass** die Programmiereinrichtung bzw. die Programmier- und Spannungsversorgungseinheit (32) eine Adaptereinheit (38) zum Anschluss einer Rechnereinheit (40) umfasst.

7. Sprech- und/oder Videoeinrichtung nach Anspruch 6,
**dadurch gekennzeichnet,**
**dass** die Rechnereinheit (40) eine Speichereinrichtung aufweist, in welcher das in das speicherprogrammierbare Bauelement einzuprogrammierende Programm abgelegt ist.

8. Sprech- und/oder Videoeinrichtung nach Anspruch 6 oder 7,
**dadurch gekennzeichnet,**
**dass** die Rechnereinheit (40) ein Desktop-Computer, tragbarer Notebook-Computer oder ein Personalcomputer ist.

9. Sprech- und/oder Videoeinrichtung nach einem der Ansprüche 1 bis 8,
**dadurch gekennzeichnet,**
**dass** durch die Programmierung des speicherprogrammierbaren Bauelements (18) die Funktionalität der Sprech- und/oder Videoeinrichtung (10) entsprechend dem einprogrammierten Programm veränderbar ist.

10. Sprech- und/oder Videoeinrichtung nach einem der Ansprüche 1 bis 9,
**dadurch gekennzeichnet,**
**dass** die mindestens eine Öffnung (20) und/oder die mindestens eine weitere Öffnung (22) an der dem Benutzer abgewandten Rückseite (42) des Gehäuses (12) angeordnet sind.

11. Sprech- und/oder Videoeinrichtung nach einem der Ansprüche 1 bis 10,
**dadurch gekennzeichnet,**
**dass** Fixiermittel zur Festlegung der Kontaktelemente (34; 36) in den jeweiligen Gehäuseöffnungen (20, 22) an den Kontaktelementen (34; 36) und/oder den Gehäuseöffnungen (20, 22) angeordnet sind.

## Claims

1. Programmable voice and/or video device (10) comprising a housing (12), which covers an electronic circuit (16) provided with conductor tracks, wherein the electronic circuit (16) has at least one memory-programmable component (18) connected to at least one portion of the conductor tracks, and wherein the housing (12) has at least one opening (20; 22) through which, when the housing (12) is closed, electrical contact can be made with at least one portion of the conductor tracks for the programming of the memory-programmable component (18),
**characterized**
**in that** the electronic circuit (16) is constructed on a printed circuit board (26), wherein, on the conductor tracks with which electrical contact is to be made, contact areas (28; 30) are formed on the printed circuit board (26),
**in that** the contact areas (28; 30) are arranged below the respective housing opening (20; 22) and are aligned with the respective housing opening (20; 22), wherein contact can be made with the contact areas (28; 30) through the respective housing opening (20; 22) by means of contact elements (34; 36) which can be connected to a programming device and which have electrically conductive needle and/or spring contacts producing the contact with the contact areas (28; 30), wherein the contact elements (34; 36), upon insertion into the respective housing openings (20, 22), can be fixed in the latter and wherein the contact elements (34; 36) are fixedly located in the respective housing openings (20, 22) with an accurate fit by means of frictional forces and clamping lugs which are arranged on the contact elements (34; 36) and which engage behind the housing openings (20, 22).

2. Voice and/or video device according to Claim 1,
**characterized**
**in that** at least one further portion of the conductor tracks for the voltage supply of the voice and/or video device (10) can be electrically connected or contact-connected to a voltage source through the at least one opening (22)

3. Voice and/or video device according to Claim 1 or 2,
**characterized**
**in that** the housing (12) has at least one further opening (22) through which at least one further portion of the conductor tracks for the voltage supply of the voice and/or video device (10) can be electrically connected or contact-connected to a voltage source.

4. Voice and/or video device according to any of Claims 1 to 3,
**characterized**
**in that** contact can be made with the conductor tracks or the contact areas (28; 30) through the respective housing opening (20; 22) by means of contact elements which can be connected to a voltage source.

5. Voice and/or video device according to any of Claims 1 to 4,
**characterized**
**in that** contact can be made with the conductor tracks or the contact areas (28; 30) through the respective housing opening (20; 22) by means of contact elements (34, 36) which can be connected to a programming and voltage supply unit (32).

6. Voice and/or video device according to any of Claims 1 to 5,
**characterized**
**in that** the programming device or the programming and voltage supply unit (32) comprises an adaptor unit (38) for connecting a computer unit (40).

7. Voice and/or video device according to Claim 6,
**characterized**
**in that** the computer unit (40) has a memory device, in which the program to be programmed into the memory-programmable component is stored.

8. Voice and/or video device according to Claim 6 or 7,
**characterized**
**in that** the computer unit (40) is a desktop computer, portable notebook computer or a personal computer.

9. Voice and/or video device according to any of Claims 1 to 8,
**characterized**
**in that**, by means of the programming of the memory-programmable component (18), the functionality of the voice and/or video device (10) can be altered in accordance with the programmed program.

10. Voice and/or video device according to any of Claims 1 to 9,
**characterized**
**in that** the at least one opening (20) and/or the at least one further opening (22) are/is arranged on the rear side (42) of the housing (12) facing away from the user.

11. Voice and/or video device according to any of Claims 1 to 10,
**characterized**
**in that** fixing means for fixedly locating the contact elements (34; 36) in the respective housing openings (20, 22) are arranged on the contact elements (34; 36) and/or the housing openings (20, 22).

## Revendications

1. Dispositif voix et/ou vidéo programmable (10) doté d'un boîtier (12) recouvrant un circuit électronique (16) pourvu de pistes conductrices, le circuit électronique (16) comportant au moins un composant (18) présentant des capacités de programmation enregistrées relié à une partie au moins des pistes conductrices et le boîtier (12) comportant au moins une ouverture (20 ; 22) à travers laquelle, lorsque le boîtier (12) est fermé, au moins une partie des pistes conductrices peut être mise en contact sur le plan électrique pour programmer le composant (18) présentant des capacités de programmation enregistrées ;
**caractérisé en ce que** :
le circuit électronique (16) est monté sur une plaque conductrice (26), des surfaces de contact (28, 30) étant réalisées sur la plaque conductrice (26) au niveau des pistes conductrices à mettre en contact sur le plan électrique ;
les surfaces de contact (28, 30) sont disposées en dessous de l'ouverture de boîtier (20 ; 22) respective et alignées avec l'ouverture de boîtier (20 ; 22) respective, les surfaces de contact (28 ; 30) pouvant être mises en contact à travers l'ouverture de boîtier (20 ; 22) respective à l'aide des éléments de contact (34, 36) pouvant être reliés à un dispositif de programmation, lesdits éléments de contact comportant des contacts par pointe et/ou ressort électriquement conducteurs établissant le contact avec les surfaces de contact (28 ; 30), les éléments de contact (34 ; 36) pouvant être fixés dans les ouvertures de boîtier (20, 22) respectives lors de leur introduction dans celles-ci et les éléments de contact (34 ; 36) étant agrippés par l'arrière de façon ajustée dans les ouvertures de boîtier (20, 22) respectives par le biais de forces de frottement présentes dans les ouvertures de boîtier (20, 22).

2. Dispositif voix et/ou vidéo selon la revendication 1, **caractérisé en ce qu'**au moins une partie supplémentaire des pistes conductrices peut être reliée et/ou mise en contact sur le plan électrique avec une source de tension au travers de l'au moins une ouverture (22) pour alimenter en tension le dispositif voix et/ou vidéo (10).

3. Dispositif voix et/ou vidéo selon la revendication 1 ou 2, **caractérisé en ce que** le boîtier (12) comporte au moins une ouverture (22) supplémentaire à travers laquelle au moins une partie supplémentaire des pistes conductrices peut être reliée et/ou mise en contact sur le plan électrique avec une source de tension pour alimenter en tension le dispositif voix et/ou vidéo (10).

4. Dispositif voix et/ou vidéo selon l'une quelconque des revendications 1 à 3, **caractérisé en ce que** les pistes conductrices et/ou les surfaces de contact (28 ; 30) peuvent être mises en contact par le biais d'éléments de contact pouvant être reliés à une source de tension au travers de l'ouverture de boîtier (20 ; 22) respective.

5. Dispositif voix et/ou vidéo selon l'une quelconque des revendications 1 à 4, **caractérisé en ce que** les pistes conductrices et/ou les surfaces de contact (28 ; 30) peuvent être mises en contact par le biais d'éléments de contact (34, 36) pouvant être reliés à une unité de programmation et d'alimentation en tension (32) au travers de l'ouverture de boîtier (20 ; 22) respective.

6. Dispositif voix et/ou vidéo selon l'une quelconque des revendications 1 à 5, **caractérisé en ce que** le dispositif de programmation et/ou l'unité de programmation et d'alimentation en tension (32) comprend une unité d'adaptateur (38) pour le raccordement à une unité de calcul (40).

7. Dispositif voix et/ou vidéo selon la revendication 6, **caractérisé en ce que** l'unité de calcul (40) comprend une mémoire dans laquelle est mémorisé le programme servant à programmer le composant présentant des capacités de programmation enregistrées.

8. Dispositif voix et/ou vidéo selon la revendication 6 ou 7, **caractérisé en ce que** l'unité de calcul (40) est un ordinateur de bureau, un ordinateur portable ou un ordinateur personnel.

9. Dispositif voix et/ou vidéo selon l'une quelconque des revendications 1 à 8, **caractérisé en ce que** la fonctionnalité du dispositif voix et/ou vidéo (10) peut être modifiée en fonction du programme programmé par le biais de la programmation du composant (18) présentant des capacités de programmation enregistrées.

10. Dispositif voix et/ou vidéo selon l'une quelconque des revendications 1 à 9, **caractérisé en ce que** l'au moins une ouverture (20) et/ou l'au moins une ouverture (22) supplémentaire sont disposées sur le côté arrière (42) du boîtier (12) situé à l'opposée de l'utilisateur.

11. Dispositif voix et/ou vidéo selon l'une quelconque des revendications 1 à 10, **caractérisé en ce que** des moyens de fixation sont disposés au niveau des éléments de contact (34 ; 36) et/ou des ouvertures de boîtier (20, 22) pour fixer les éléments de contact (34 ; 36) dans les ouvertures de boîtier (20, 22) respectives.
